Europäisches Patentamt

European Patent Office

Office européen des brevets

(19)

(11) **EP 0 920 696 B1**

(12)

# EUROPEAN PATENT SPECIFICATION

(45) Date of publication and mention
of the grant of the patent:
**14.05.2003 Bulletin 2003/20**

(21) Application number: **97938524.2**

(22) Date of filing: **21.08.1997**

(51) Int Cl.$^7$: **G11B 7/135**, G01B 11/30,
G01N 21/55, G02B 21/00

(86) International application number:
**PCT/US97/14791**

(87) International publication number:
**WO 98/008219 (26.02.1998 Gazette 1998/08)**

(54) **PHASE-CONTROLLED EVANESCENT FIELD SYSTEMS AND METHODS**

AUF DER PHASENSTEUERUNG ABKLINGENDER FELDER BASIERENDE SYSTEME UND
VERFAHREN

SYSTEMES ET METHODES UTILISANT LES CHAMPS EVANESCENTS A COMMANDE DE PHASE

(84) Designated Contracting States:
**DE FR GB**

(30) Priority: **21.08.1996 US 701173**
**08.10.1996 US 728262**

(43) Date of publication of application:
**09.06.1999 Bulletin 1999/23**

(73) Proprietor: **POLAROID CORPORATION**
**Cambridge, Massachusetts 02139-3589 (US)**

(72) Inventor: **GUERRA, John, M.**
**Concord, MA 01742 (US)**

(74) Representative: **Reitzner, Bruno, Dr. et al**
**Splanemann Reitzner**
**Baronetzky Westendorp**
**Patentanwälte**
**Rumfordstrasse 7**
**80469 München (DE)**

(56) References cited:
**EP-A- 0 594 193          EP-A- 0 688 014**
**EP-A- 0 726 565          US-A- 3 584 230**
**US-A- 5 508 805**

- **C.K. CARNIGLIA ET AL: "Phase-shift**
**measurement of evanescent electromagnetic**
**waves" JOURNAL OF THE OPTICAL SOCIETY**
**OF AMERICA, vol. 61, no. 8, August 1971, pages**
**1035-1043, XP002047842**

**Description**

## BACKGROUND OF THE INVENTION

### Field Of the Invention

This invention in general relates to systems and methods that utilize a phase-controlled evanescent field to sense or to produce very small features at an object surface.

### Description Of The Prior Art

The use of evanescent fields for measuring and visualizing submicron surface topographic features is known. The prior art discloses whole-field reflected evanescent light microscopes where a sample is illuminated by an evanescent field from an unrestricted total reflection surface at the object plane of an epi, or reflected light, illuminator. The sample may be opaque or transparent, thick or thin, and can be viewed in real-time with high energy throughput. Such microscopes are very sensitive to smooth surfaces because of their use of the exponentially varying amplitude of the evanescent field in the vertical direction to sense very small surface height variation. Rough surfaces, in comparison, scatter light back into the microscope, and this tends to decrease contrast and sensitivity. Deeper surface features are rendered as bright, because these areas penetrate the evanescent field to a small degree so that the epiillumination is nearly totally reflected. The difficulty in detecting and measuring small changes in bright scenes limits the observable topographic depths to about ¾ of the wavelength of the illuminating radiation. Moreover, the illumination optics and the imaging optics are coupled because the imaging objective also serves as the illumination condenser. The design of such instruments is then restricted to those objectives, magnifications, fields of view, and numerical apertures which are commercially obtainable. In addition, because of the coupling of imaging and illumination optics, it is difficult to modify the polarization, phase, incident angle, and direction of the illumination. This, in turn, restricts the ability to maximize the tunneling range, or to increase lateral resolution, or to tunnel through less rare media such as water, which is typically present in biological applications.

The prior art also disdoses devices in which evanescent light from transilluminated samples is scattered into objective pupils, such as optical evanescent light field microscopes in which the light that enters the objective pupil is evanescent field light that has been scattered from a sample surface. However, in these microscopes, the sample is transilluminated with illumination incident at beyond the critical angle such that the evanescent field from the sample surface is received. It is necessary then that the sample be transparent at the radiative frequency, or is made thin enough to be transparent.

EP-A-0 726 565 which is reflected in the preamble of claim 1 discloses an optical pick-up, and in particular an optical pick-up capable of writing or reading out a signal on/from an optical disk using frustrated total internal reflection. From this document a system for exhibiting features of an object by means of an evanescent field is known. However, it would be desirable to improve the output and sensitivity.

While the art describes a variety of devices that utilize evanescent field illumination for investigating vertical surface characteristics, there remains a need for improvements that offer advantages and capabilities not found presently in conventional systems, and it is a primary object of this invention to provide such improvements.

Imaging devices as reflected in the claims employ phase shifting and analysis of phase-controlled evanescent light to provide enhanced ability to produce or sense substantially subwavelength features located at a surface layer of an object in proximity to the phase-controlled evanescent field. With the enhanced resolution through the use of the phase-controlled evanescent field, enhanced optical storage capacity is made possible, especially because of enhanced lateral resolution.

The electromagnetic waves comprising the evanescent field comprise planes of constant phase, which planes are substantially perpendicular planes of constant amplitude. The planes of constant phase are thus normal to the surface layer of the object. By controlling the phase of the source of illumination and analyzing the output from the surface layer, either by phase analysis or by phase-to-amplitude decoding, subwavelength lateral surface topography is enhanced without sacrificing the detail of vertical features. Methods and means for dynamic or static phase shifting of inhomogeneous waves comprising the evanescent field are disclosed, as well as other non-imaging applications.

In accordance with other features of the invention, the phase shift and analysis is achieved by control and selection of illumination wavelength, use of two wavelengths, polarization state control including electro-optic modulation, incident angle, azimuthal incident angle, optical cavity control, and phase retardation, where control in all embodiments may be for either unidirectional or omnidirectional incident illumination.

In accordance with yet another feature of the invention, the means of controlling and shifting the phase of the evanescent field is a diffractive structure with variable grating period substantially less than the illumination wavelength, where the phase of the evanescent modes thus formed is locally locked to the diffraction structure, and the variable grating period can be varied.

In accordance with yet another feature of the invention, the means and methods of phase shifting are adapted to the evanescent field from highly-bound waves, such as at the tip of an optical scanning probe which comprises an optical waveguide operated below its cutoff frequency to reduce the effective aperture of the probe and thus increase lateral resolution.

In accordance with yet another feature of the invention, the means of controlling the phase of the evanescent field surrounding the core of an optical waveguide or scanning probe is in the form of a Bragg reflector stack of dielectric layers, such that the effective aperture of the probe is reduced over the normal metallic aperture.

In accordance with yet another feature of the invention, the means to control and shift the phase of the evanescent field comprises a plurality of close-packed tapered waveguides , or probes, operated below their cutoff frequency, where the phase of the resulting evanescent field is locked to the individual waveguides, with additional means to locally scan the plurality of probes laterally over a small distance.

In accordance with yet another feature of the invention, the plurality of close-packed tapered waveguides are arranged to form a phase-array synthetic aperture.

Other features of the invention will be readily apparent when the following detailed description is read in connection with the drawings.

## BRIEF DESCRIPTION OF THE DRAWINGS

The structure and operation of the invention, together with other objects and advantages thereof, may best be understood by reading the detailed description to follow in connection with the drawings in which unique reference numerals have been used throughout for each part and wherein:

Fig. 1 is a diagrammatic partially elevational and partially perspective view of a system in accordance with the invention employing a phase-controlled evanescent field illumination section;

Fig. 2 is a flow chart illustrating the operation of the of the invention of Fig. 1;

Figs. 3A and 3B are diagrams illustrating how the amplitude and position of an evanescent field is modified as a result of a phase change;

Fig. 4 is a diagram illustrating how a conventional phase shift, $\delta_p$, results in an axial shift in propagating radiation and thus detects height information;

Fig. 5 is a diagram illustrating how a phase shift, $\delta_p$, results in a lateral shift in evanescent field radiation and thus detects spatial information in the X-Y plane;

Fig. 6 is a diagram showing a propagating wavefront incident on a total reflection surface, illustrating the phase shift caused by a phase-shifting device inserted into the wavefront, with the device shown in elevation as a cross section;

Fig. 7 is a diagrammatic planar view showing the phase-shifting device of Fig. 6;

Fig. 8 is a diagrammatic elevational view showing the phase-shifting device of Figs. 6 and 7 in combination with a prism and sample surface;

Fig. 9 is a diagrammatic planar view of a phase-shifting plate for placement into the optical path of the prismatic element of Fig. 1;

Fig. 10 is a diagrammatic planar view of a linear polarizer for use in controlling phase shifting, such as in the system of Fig. 1;

Fig. 11 is a diagrammatic view of an image area;

Fig. 12 is a diagrammatic view illustrating how angle of incidence can be used, either statically or dynamically, to control phase of evanescent field illumination;

Fig. 13 is a diagrammatic planar view of a mask for selecting specific incident angles as shown in Fig. 12;

Fig. 14 is a diagrammatic view showing how incident angle may be selected when used in a prismatic arrangement;

Fig. 15 is a diagrammatic view of phase shift accomplished by varying the optical path by physical axial movement as in, for example, control by a piezo actuator,

Fig. 16 is a diagrammatic elevational view of an evanescent field generated by means of a subwavelength diffracting structure, with phase determined by structure geometry and with the structure dynamically adjustable for tuned heterodyning phase control;

Fig.. 17 is a diagrammatic elevational view of the evanescent field geometry in a near-field probe, showing how only the center of the field has equal phase planes normal to the probe so that phase shifting and restriction results in a smaller effective aperture and higher resolution;

Fig. 18 is a diagrammatic elevational view of an improved near-field probe where the aperture is a multi-layer stack Bragg reflector;

Fig. 19 is a partial diagrammatic perspective view of phase shifting matrix of probes moveable in the X-Y plane;

Fig. 20 is a diagrammatic elevational view of a system that employs phase controlled evanescent field illumination for reading and writing data to provide enhanced information storage densities in a recording medium via increased lateral spatial resolution;

Fig. 21 is a diagrammatic elevational view of an aplanatic sphere that may be used in the system of Fig. 20;

Fig. 22 is a diagrammatic elevational view, partially in section, of a medium in which distributed features have been incorporated so as to receive phase-controlled radiation;

Fig. 23 is a diagrammatic elevational view, partially in section, of a medium in which a diffractive grating structure has been formed to generate an evanescent field; and,

Fig. 24 is a diagrammatic elevational view, shown partially in section, of a medium in which a lenticulated microlens structure is laminated to a substrate in which information has been encoded as pits of varying depth.

## DESCRIPTION OF THE PREFERRED EMBODIMENTS

This invention generally relates to the fields of: i) surface layer and subsurface detection, or imaging, and fine detail measurement of subwavelength optically-active features and, ii) the application of phase-controlled evanescent field illumination to the recording of information by means of generating optically-active features disposed in the surface layer of a recording medium. In particular, the invention relates to methods and apparatus by which phase-controlled bound evanescent field illumination is converted by frustration of total internal reflection and/or scattering into propagating radiation. This propagating radiation is collected for subsequent display or optical recording purposes by means of analysis and image-processing techniques by which the phase-encoded information present in the propagating radiation is decoded.

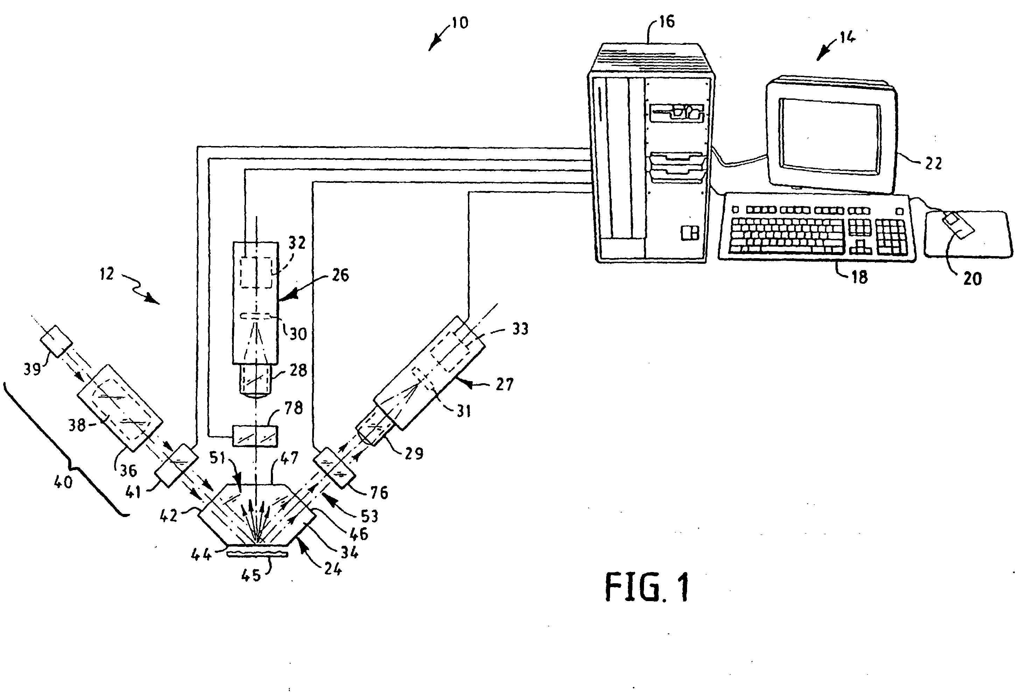

Reference is now made to Fig. 1 which shows generally, a preferred embodiment of a phase-controlled evanescent field imaging system 10 which serves as the basis for use in surface feature detection, storage and retrieval systems in a manner described below. System 10 is particularly suitable for full-field, video visualization and detection of microtopographic and subsurface features of media having surface characteristics which can be characterized as: i) smooth, ii) rough, iii) combinations of partially refracting and diffracting (i.e., specular), iv) partially scattering, or, more generally, v) having any optical properties (e.g., micro spatial index variations) capable of converting bound evanescent fields to propagating radiation. As will be further seen, system 10 collects propagating radiation in specular form to assess characteristics of smooth surfaces, and collects propagating radiation in scattered form for assessment of rough surfaces. In assessing smooth surfaces, images appear as dark against a light background, and in the assessment of rough or optically-scattering surfaces, images appear as light against a dark background (commonly referred to as "dark-field" imaging). In a dark-field imaging system, the path of the illuminating radiation is typically decoupled from the path of the propagating radiation. Accordingly, the section used to detect and image the object surface is physically distinct and separated from the section used to illuminate the object surface. System 10 can be used for information recording and retrieval as well as for the measurement of the surface characteristics of mechanical structures, paint, paper, fabrics, and other materials.

System 10 comprises an illumination and image-formation section 12 and an image-processing and display section 14. Section 14 comprises any well-known general purpose computer 16, or work station, having a CPU, RAM memory, hard and floppy drives, input devices such as a keyboard 18 and mouse 20, and color display monitor such as at 22. Preferably, computer 16 has sixteen or more megabytes of RAM and is otherwise equipped with high-throughput data and video paths. The internal video card preferably comprises two or more megabytes of resident memory with the capability of generating 32-bit, or better, colors for high-tone resolution. Internal signal and image processing programs may be stored on an internal hard drive or external storage device of computer 16 for transferal to RAM for processing needs as required.

Illumination and image-formation section 12 comprises a radiation-conversion device, such as an optical head 24, for facilitating the illumination of the surface of an object to be visualized and measured, and video cameras 26 and 27, for collecting and imaging propagating radiation from the object surface. Video cameras 26 and 27 may be any suitable conventionally-available type of the desired spatial and tonal resolution. Preferably, each of video cameras 26 and 27 is a wide-angle type and may have a magnifying objective lens 28 and a slightly demagnifying objective lens 29, respectively. Alternatively, objective lenses 28 and 29 may be zoom lenses of appropriate tele- to wide-angle design. In certain applications, video cameras 26 and 27 may be coupled to microscopes.

Located at the plane of best focus of objective lens 28 is a photodetector 30, which may be a conventional CCD or a vidicon tube. Video signals generated from photodetector 30 are digitized within camera 26 by means of an internal chip 32 designed for that purpose, or may be transmitted to an appropriate electronics board in computer 16. Located at the plane of best focus of objective lens 29 is a photodetector 31, which may also be a conventional CCD or a vidicon tube. Video signals generated from photodetector 31 are digitized within board camera 27 by means of an internal chip 33 designed for that purpose or may be also be transmitted to computer 16. Cameras 26 and 27 and computer 16 are configured in well-known manners so that video signals are digitized and digital images are generated for display on monitor 22, as image processing speed permits.

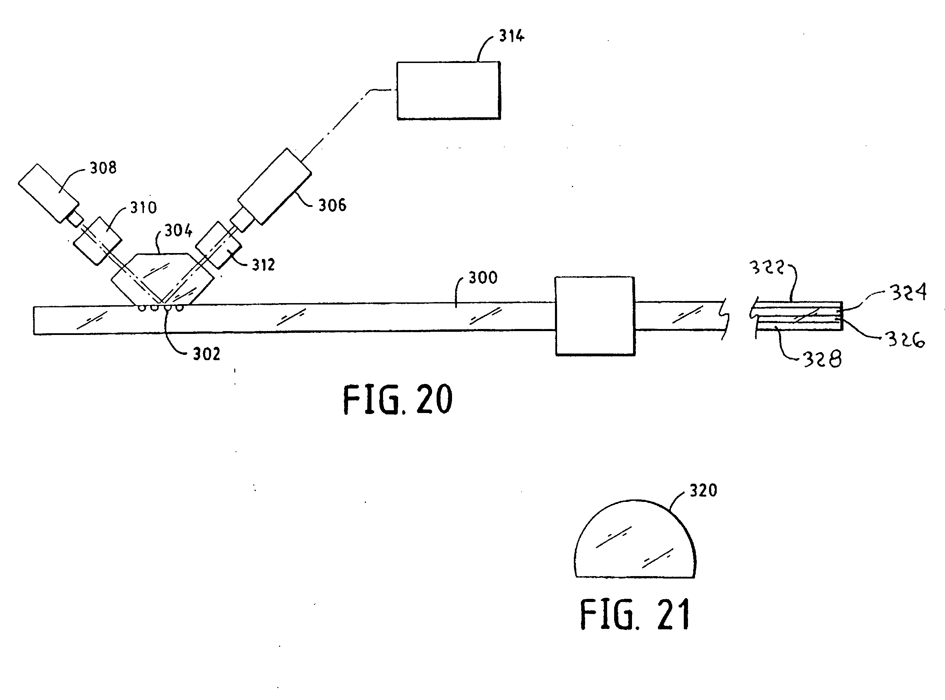

Optical head 24, in a preferred embodiment, comprises a bulk radiation-transmissive, prismatic dielectric body 34, comprising a radiation-admitting facet 42, an active facet 44, for placement adjacent an object surface such as that indicated at 45, and radiation-emitting facets 46 and 47. Alternatively, an aplanatic sphere 320, shown in Fig. 21, may be used as a radiation-conversion device. Optically coupled to facet 42, in Fig. 1, is a phase-controlled illumination section 40 comprising an illumination source 39, a collimating section 36, and a phase controller 41.

Illumination source 39 is preferably of narrow bandwidth and may comprise a radiation source coupled with narrow-bandpass filters to limit the wavelength of radiation to predetermined ranges. Illumination source 39 may comprise a relatively low-power radiation source, such as a light-emitting diode (LED) when system 10 is used for the detection of surface features. However, when system 10 is used for producing surface features, or recording information on a recording medium, illumination source 39 will comprise a relatively high-power radiation device, such as a laser diode or a laser array. The power requirements for illumination source 39 will be a function of the characteristics of the recording medium.

Collimating section 36 comprises a tube in which are contained suitable collimating optics in the form of a well-known bulk optic lens system, shown diagrammatically at 38. Radiation emitted by illumination source 39 is directed through phase controller 41, which serves as a means for controlling the phase of radiation directed toward optical head 24 as explained in greater detail below.

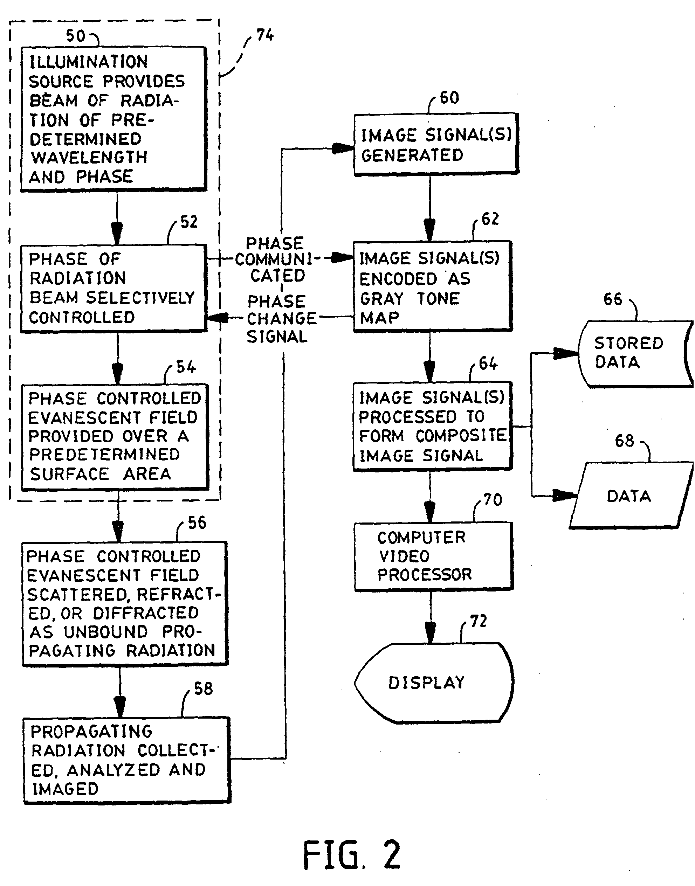

Fig. 2 is a flow chart for illustrating the general operation of imaging system 10. As shown in the chart, illumination source 39 first provides a beam of radiation of predetermined wavelength, phase, and numerical aperture, as indicated in block 50. The phase of the beam of radiation is then selectively controlled, as indicated in block 52, and is communicated to block 62, which in turn may provide phase change control signals to block 52 to selectively modulate the phase as required. Once the phase is set, the phase-controlled illumination enters optical head 24 to produce a phase-controlled evanescent field at active facet 44, as described in greater detail below. The phase-controlled evanescent field is then "frustrated" by being reflected, refracted, diffracted, or scattered as propagating radiation, as indicated in block 56. Frustration of the phase-controlled evanescent field occurs when the surface layer of an object 45 is brought into proximity with the field.

When illuminated by radiation, the surfaces of most objects will produce refracted, diffracted, or scattered radiation, in accordance with the smoothness or roughness properties of the surface layer. When a surface is very smooth, it will predominantly reflect radiation and, when rough, it will predominantly scatter radiation. As best seen in Fig. 1, radiation propagating from a smooth surface originates from the frustrated total internal reflection at the boundary of active surface 44 and adjacent surface of sample 45. This propagating radiation is specular and is designated generally at 53. Scattered radiation is generally designated at 51 and propagates over a solid angle determined by the properties of the surface of sample 45.

Specular propagating radiation 53 is analyzed by a phase analyzer 76 and imaged by means of video camera 27. Propagating scattered radiation 51 is analyzed by a phase analyzer 78 and imaged by means of video camera 26. As indicated in block 58, these components are under the control of computer 16. The intensity of the propagating radiation varies as a function of the phase of the illuminating beam and of the lateral position of local subwavelength topographic features of the surface of object 45. The corresponding propagating radiation is analyzed for each phase of controlled illuminating radiation, and one or more corresponding image signals are generated in block 60. Each image signal varies in correspondence with the imagewise variation in the phase of the illuminating beam of radiation. Accordingly, it is possible to directly visualize the image obtained in block 58 with the aid of a microscope. It should be clear that either or both types of propagating radiation, 51 and 53, can be considered, and this may be done simultaneously or separately.

The image signal is encoded, as indicated in block 62, as a gray tone map in which tone levels indicate lateral and vertical features of the sample as a function of phase. This encoding may be accomplished via a look-up table (LUT) as is well-known in the relevant art. The encoded image signals are then processed to form a composite signal, as indicated in block 64. This information can be stored in memory, as indicated in block 66, or printed out as data in hard copy form, as indicated in block 68. The gray tone map signal is then formatted for two-dimensional or three-dimensional display by means of computer 16 or other suitable dedicated image processor. The composite formatted signal is then transmitted to a video processor in computer 16, as indicated in block 70, from which it can be displayed on monitor 22, as indicated in block 72.

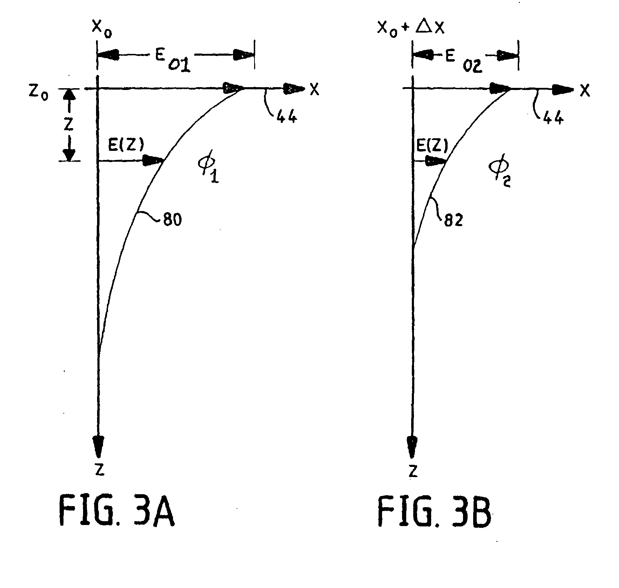

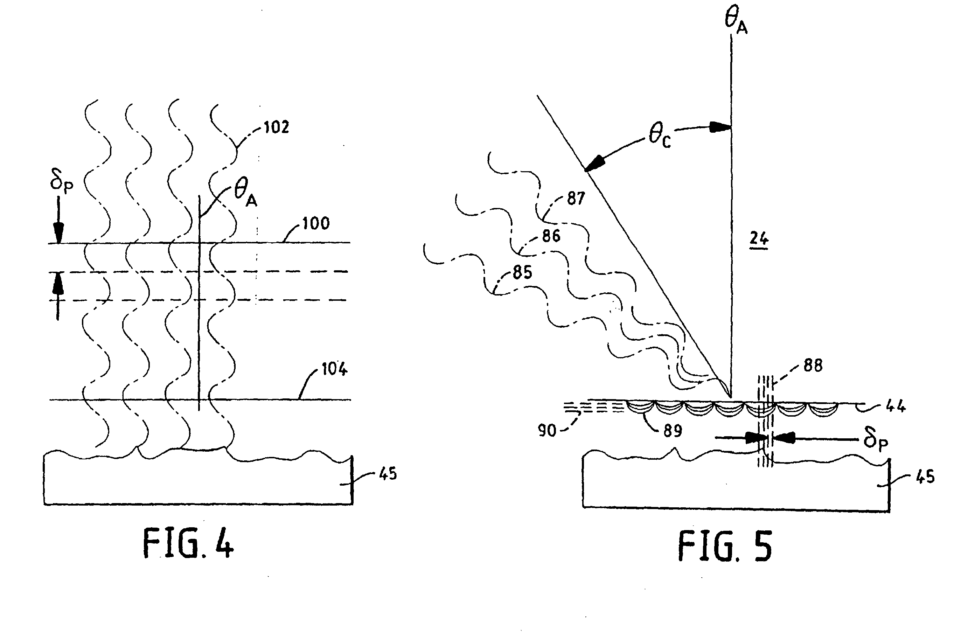

The amount of signal processing that occurs in block 64 to produce the composite image signal can vary depending upon the information desired. For example, two gray-tone maps, each generated at a different phase, can be subtracted from each other to provide an image in which edges will be enhanced. As another example, the signal processing can include the complex reduction of a series of sequential interference images in which interference information is converted into an amplitude or radiation intensity pattern in the spatial domain (i.e., in the X-Y plane). Figs. 3 and 5 illustrate how phase control and analysis of the evanescent illuminating field are utilized to achieve enhanced resolution in this spatial plane.

As best seen in Fig. 5, radiation passes into a radiation-transmissive dielectric body 34 of optical head 24 (see Fig. 1) at an incident angle equal to or greater than the critical angle, $\theta_c$, so that the radiation is totally internally reflected at active facet 44. Active facet 44 is an interface formed between the dielectric medium and a less dense medium having a smaller index of refraction, such as air, oil or water. It should be understood that optical head 24 can be transmissive over all or any part of the electromagnetic spectrum, including but not limited to optical (i.e., ultra-violet to infrared), x-ray and millimeter-wave frequencies, depending upon the application. Although the incident radiation is shown to preferably be a collimated beam comprising incident radiation waves 85, 86, and 87, the radiation need not be collimated.

There is provided in Fig. 3A a diagrammatic representation of an evanescent field 80 at a first phase angle, $\phi_1$, produced at the boundary between active facet 44 and the less dense, lower index of refraction medium adjacent to active facet 44. The intensity of evanescent field 80 decreases exponentially as a function of distance from the surface of active facet 44 (i.e., along the Z-axis). The amplitude E of evanescent field 80 is given by:

$$E_{evanescent} = E_0 \exp(-\frac{z}{d_p}) \qquad (1$$

where $E_0$ is the phase-dependent amplitude of the electric field associated with the radiation in the denser, higher index of refraction medium forming optical head 24, and $d_p$ is the penetration depth in the less dense medium at which $E_0$ decreases to $E_0/e$. The penetration depth is given by:

$$d_p = \frac{\lambda_1}{2\pi(\sin^2\theta - n_{21}^2)^{\frac{1}{2}}} \qquad (2$$

where $\lambda_1$ is the wavelength in the denser medium, $\theta$ is the angle of incidence, and $n_{21}$ is the ratio of the higher to the lower indices of refraction at the boundary of active facet 44. The actual penetration depth, where $E_{evanescent}$ falls to the limit of detectability, is dependent on these variables as well as upon both the photodetector sensitivity and the optical properties of the surface layer of the object, and is typically approximately $0.75\lambda$. However, the evanescent field may exist, however small in intensity, for tens of wavelengths, if the parameters in equation (2) are optimized. As is well-known in the relevant art, evanescent field 80 extends normal to the surface of active facet 44 and is affected by the surface layer of an object placed in close proximity to active facet 44.

The amplitude of evanescent field 80 in the proximity of active facet 44, indicated as $E_{01}$, is phase-angle dependent because standing wave $E_0$ results from the superposition of incident and reflected waves at the total reflection interface (i.e., the boundary between the denser high-index medium and the low-index medium). The electric

field amplitude, $E_0$, is given by:

$$E_0 = 2\cos\left[\left(\frac{2\pi z}{\lambda_c}\right) + \phi\right] \qquad (3$$

which is twice the amplitude of the standing wave at the given phase, resulting from the addition of the incident and the reflected waves, and has an evanescent wavelength $\lambda_e$,

$$\lambda_e = \frac{\lambda_1}{\sin\theta} \qquad (4$$

where $\lambda_1$ is $\lambda/n_1$, the free-space wavelength divided by the refractive index of the medium 1. Here, medium 1 is taken to be the high-index of refraction medium of the optical head 24. The standing and penetrating waves are normal to the surface.

Referring now to Fig. 3B, there is shown a diagrammatic representation of a second evanescent field 82 at active facet 44 resulting from incident radiation having a phase angle different from that of evanescent field 80. The amplitude $E_{02}$ of second evanescent field at active facet 44 is smaller than that of $E_{01}$ (shown in Fig. 3A) in accordance with equation (3) where the phase angle is $\phi_2$. In Fig. 3B, this change in phase angle has resulted in the displacement of the evanescent field laterally, in the X-direction, from position $x_0$ to position $x_0 + \delta x$. This lateral displacement, taken in conjunction with the reduction in amplitude with phase, is an important property of phase-controlled evanescent field illumination that is utilized to advantage by this invention. As can be appreciated, there are, at a given phase: i) planes of constant amplitude, the constant-amplitude planes oriented generally parallel to active facet 44, and ii) planes of constant phase, the constant-phase planes oriented generally perpendicularly to the constant-amplitude planes and normal to active facet 44.

The relationship between the planes of constant phase and the planes of constant amplitude for propagating radiation is illustrated diagrammatically in Fig. 5. Illumination waves 85, 86 and 87, are incident at an angle greater than the critical angle, $\theta_c$, as measured from the optical axis, $O_A$, normal to active facet 44. Active facet 44 totally internally reflects this radiation and produces an evanescent field, indicated generally at 89. Evanescent field 89 is frustrated, and propagating radiation is thereby produced, when the surface of object 45 is brought in proximity to evanescent field 89. The planes of constant phase of evanescent field 89, indicated by the phantom lines at 88, are thus normal to active facet 44, generally perpendicular to the surface of object 45, and perpendicular to the planes of constant amplitude, indicated by the phantom lines at 90. Accordingly a phase difference in the illuminating radiation, $\delta_p$, results in a lateral displacement in the corresponding evanescent field radiation. This effect is utilized by the present invention for sensing or for producing features on the surface of object 45. Such features are typically variations in the spatial properties of the object surface in the X-Y plane (where the Y-axis is taken to be into Fig. 5).

As the angle of incidence is increased for incident illumination waves 87, 86, and 85, the amplitude of the corresponding evanescent field decreases, as shown. There is also a lateral phase shift between these wavefronts because of the difference in incident angle, but for reasons of clarity, this is not shown in the diagram. As the phase of the incident illumination is varied, constant phase planes 88 of the illumination are displaced across the surface features of object 45 in the X-Y plane. As this occurs, the phase of the corresponding propagating radiation is modulated. The modulation of specular propagating radiation 53 is analyzed by means of phase analyzer 76 and the modulation of propagating scattered radiation 51 is analyzed by means of phase analyzer 78 (see Fig. 1). This modulation results from the interaction of evanescent field 89 with the lateral, optically-active features of the surface of object 45, as represented in Fig. 5.

In comparison, reference is now made to Fig. 4 in which are shown the phase and amplitude relationships that are present in a conventional optical microscope. Here, the planes of constant phase 100 are parallel to the planes of constant amplitude, and both are perpendicular to the propagation direction which, for purposes of illustration, is shown to be along the optical axis, $O_A$. A phase shift, $\delta_p$, of propagating incident radiation 102 results in an axial shift in propagating radiation 102 as seen by the surface of sample 45. There is indicated a reference surface 104 which may be that of an objective or prismatic optical head, and may be a dry head or an oil-immersion head. In this example, which illustrates the basis for conventional interferometry, phase information can yield only optical path measurement which, when applied to metrology of a sample surface, yields only information as to the height of surface features (i. e., in the Z-direction), and does not provide information as to lateral dimensions in the X-Y plane.

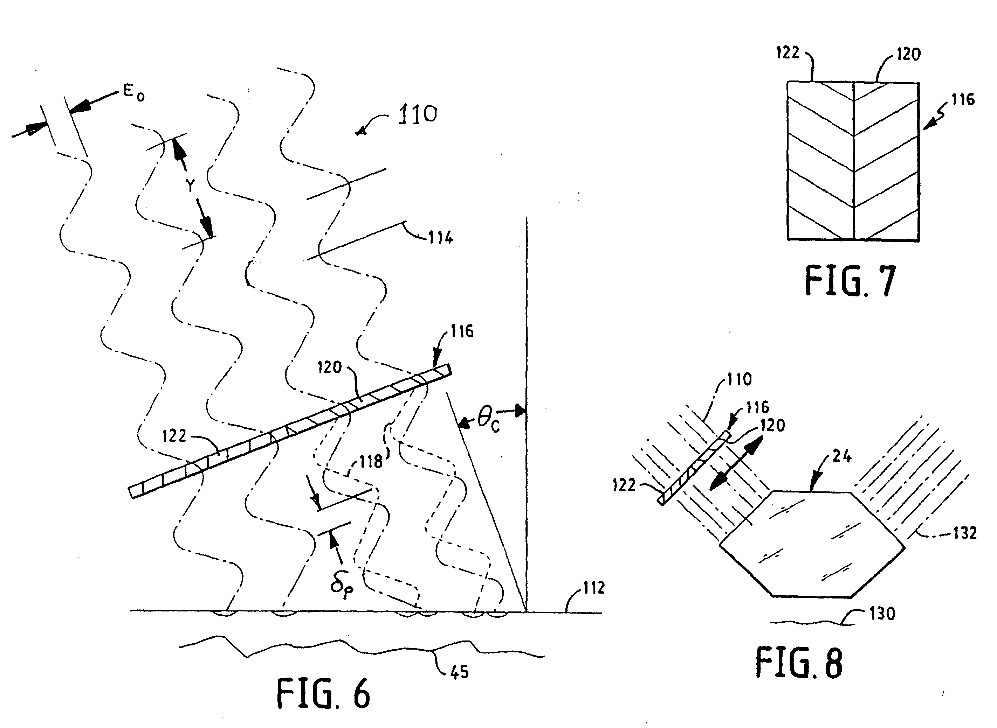

There is shown in Fig. 6 a generic propagating wavefront 110 incident on a total internal reflection surface 112, where the angle of incidence of wavefront 110 exceeds the critical angle, $\theta_c$. Wavefront 110 has a wavelength $\lambda$

and an amplitude $E_0$. Planes of constant phase 114 are perpendicular to the direction of propagation, and a phase differential $\delta_p$ is shown. A generic phase control device 116 (corresponding to phase controller 41 in Fig. 1) which has been placed into the path of wavefront 110, shifts the phase of a portion of wavefront 110 to provide phase-shifted wavefront 118 that has passed through a first section 120 of phase control device 116. The phase of wavefront 118 is in this manner controllably shifted relative to the wavefront that has passed through a second section 122 of phase control device 116.

It should be understood that while phase-control device 116, as best shown in Fig. 7 in a highly schematic and symbolic form, comprises two sections, in practice phase-control device 116 may comprise any number of sections. For example, phase-control device 116 may comprise, but is not limited to, a differential phase plate, a differential polarizer, a differential color filter, or other phase-affecting electromagnetic device. The differential in the phase-affecting properties of sections 120 and 122 is also rendered symbolically here, as a difference in the cross-hatching pattern for the two sections. The actual geometry of the boundary between the areas of shifted phase can be annular, opposing slots, or other geometry as described more fully below. Phase control device 116 is here shown symbolically to represent both static and dynamic phase-shifting devices. Dynamic phase-shifting devices include, but are not limited to, tunable optical cavities, electro-optic modulators, piezo-actuated reference plates, or phase-conjugate mirrors.

Referring now to Fig. 8, phase-control device 116 is shown in combination with the surface layer of an object 130, and a total internal reflection prism, such as prismatic optical head 24. Incident illumination 110 is phase shifted by device 116, and exiting radiation 132 is phase-analyzed through, for example, interferometry or polarimetry in order to extract the lateral phase information about surface 130 as encoded propagating radiation 132. The phase analyzer used for this analysis may be either phase analyzer 76 or phase analyzer 78 (see Fig. 1).

Interferometry utilizing the phase shifting of the evanescent field, as described herein, benefits any optical device that employs evanescent illumination, such as: near-field proximity masks, near-field scanning microscopes, the photon scanning optical microscope, and the photon tunneling microscope disclosed in the relevant art. For example, with phase control, the photon tunneling microscope can achieve a lateral resolution, in the X-Y plane, which is comparable to the vertical resolution attained in the Z-direction. Such an X-Y resolution is possible through the amplitude measurement of the decaying evanescent field, because the phase of radiation can be measured to within approximately 0.01 part of the wavelength. With phase control, the nonscanning, high-speed acquisition, whole field image is retained with the lateral resolution of a scanning optical near-field probe microscope.

The phase of the evanescent radiation can be shifted by, for example: i) changing the incident angle of illumination by some amount, where the angle is already beyond the critical angle for total reflection or, ii) keeping the incident angle fixed but selecting a particular polarization. A sweeping interference fringe can be generated using method (i) by means of interference between two coherent radiation sources separated by a specified angle, where the separation angle is variable and one of the sources is fixed, or where the separation angle is fixed and the sources are moved together angularly. In method (ii), the sweeping interference fringe is generated between two polarizations of the radiation source. This is best done at the principal angle, where the phase difference between the parallel and perpendicular polarizations is at a maximum. If the incident illumination is omnidirectional, the polarization of the illumination can be controlled with a rotated Brewster angle polarizer, or with a tourmaline plate cut so that it passes radiation polarized at right angles to its optical axis, or with a similar device.

In both cases the interference fringe is displaced across the surface layer of object 130 and is modulated by the lateral variations or optically-active features present in object 130. The subwavelength lateral variations are revealed by the deviation of the interference fringe from the reference fringe with phase angle. For example, this occurs when $\phi$ of equation (3) is set to zero. With this technique, the lateral resolution is a function of the precision with which the phase can be controlled or resolved. The resolution of this technique is thus substantially better than the wavelength and Abbe resolution limits.

Another type of phase shift occurs where the numerical aperture (NA) is equal to one. Radiation, incident at greater than the critical angle after being totally internally reflected, is shifted by $\pi$, while the specularly-reflected radiation at less than the critical angle is shifted to an amount which varies with the incident angle. This shift can be either a static or a dynamic shift.

The above discussion has largely assumed a collimated to weakly-converging beam, so that the incident illumination waves are almost planar. However, the same invention applies to more strongly converging, highly bound beams as well. Such beams can be the result of refraction in very high NA optics, but are also caused by placing a subwavelength diameter aperture in the total reflection surface. Apertures that are smaller than the illumination wavelength are used in so-called near-field optical scanning microscopes to increase lateral spatial resolution. However, even these microscopes can benefit from the lateral phase shifting disclosed here because the aperture size, and thus resolution, is ultimately limited by the finite transmission of the aperture itself.

In addition, a plurality of such probes, arranged in an array, can scan a very small area. If the scanning is done in small, parallel portions, the small scans can be combined by means of the image processing and display section 14 (see Fig. 1) to produce a very fast image acquisition. With the scanning motion, the phase planes are being displaced along the surface of object 130. Further, the plurality of probes can be arranged to form a phased-array synthetic aperture.

Another property realized with a non-planar incident illuminating wavefront is that energy flows in the X-Y plane in the evanescent field. This results in a beam shift upon reflection, known as the Goos-Haenchen or G-H shift. Therefore, selecting the azimuthal direction of the incident radiation rotates the G-H shift and is a form of phase shifting unique to evanescent radiation. Also, the choice of polarization affects the azimuthal direction of energy flow in the evanescent field. Although interference between the disturbed and reference wavefronts is the preferred technique, direct subtraction of video images acquired at two different phase angles also yields increased information about lateral features in a form of phase contrast (indicated by block 64 in Fig. 2).

Phase shifting of an evanescent field that arises from diffraction is also advantageous. It can be shown that the wavelength of the inhomogeneous waves in the evanescent field caused by diffraction from a normally illuminated plane grating with subwavelength grating spacing is determined by the spatial frequency of that grating, and so can be very small. The phase is therefore locked to the grating structure, so that altering the grating period similarly shifts the equal phase planes in the evanescent field. The grating can be modulated through acoustic, piezo, or other means, as discussed below. In general, evanescent illumination is also advantageous in optical recording, for example, because of the high field strength and the smaller wavelength indicated by equation (2) above. Adding the phase shifting and detection described above to the evanescent illumination allows even higher information storage density.

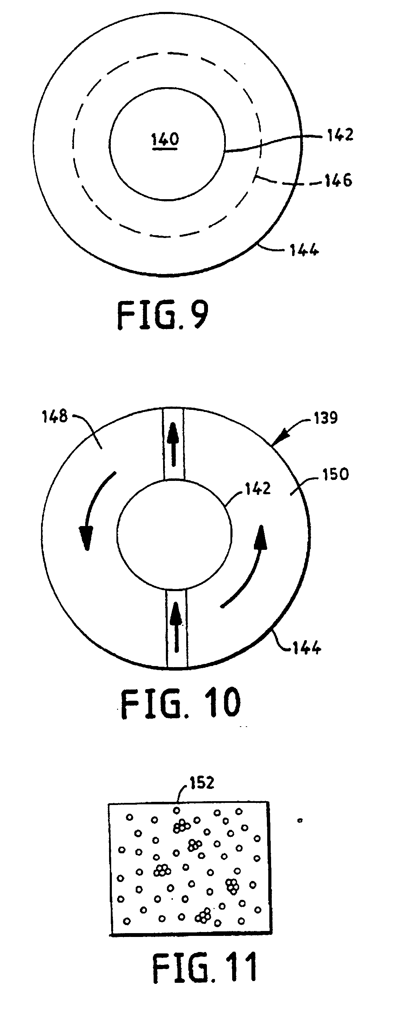

Reference is now made to Fig. 9 in which is shown a phase control device 116 having an annular geometry to coincide with the numerical aperture of a microscope objective, such as that found in a photon-tunneling microscope. Static phase shift by annular phase masks is practiced in phase-contrast microscopy, except that here the masks operate at numerical apertures greater than one so as to affect only the evanescent radiation. Zone 140 coincides with NA less than one, which is the specular radiation, while boundary 142 is at the critical angle, and zone 144 is at the maximum numerical aperture of the objective. The dotted circle 146 indicates the boundary between two annuli that cause differential phase in a wavefront passing through them. More than two such zones can be added, and the phase shift between the zones can be static or dynamic, preferably under the control of computer 16. The phase shift can arise from optical path difference, polarization, wavelength, or incident angle, for example, with respective means of phase analysis chosen accordingly.

In Fig. 10, the geometry of a phase shifting plate 139 comprises a slot aperture 148 and an opposing slot aperture 150 with an angle of $\pi$ between slot apertures 148 and 150. In an alternative embodiment, one or more additional slots can be added, with varying angles between the slots. The critical angle annulus is here likewise indicated at 142, and the maximum numerical aperture is indicated at 144. This geometry is particularly useful with polarization. Plate 139 and slots 148 and 150 can be static but are more useful if rotated about the optical axis, as indicated by the arrow arcs. A typical image 152 in Fig. 11 obtained in this way is the result of frame subtraction between two rotational settings and shows the visualization of microspheres not visualizable with standard photon tunneling techniques. When rotated about the optical axis, slotted plate 139 effects a phase shift in the evanescent field, even if the slot apertures are open, because energy flow in the lateral direction is caused to change azimuthal direction in the sample plane by virtue of the G-H shift.

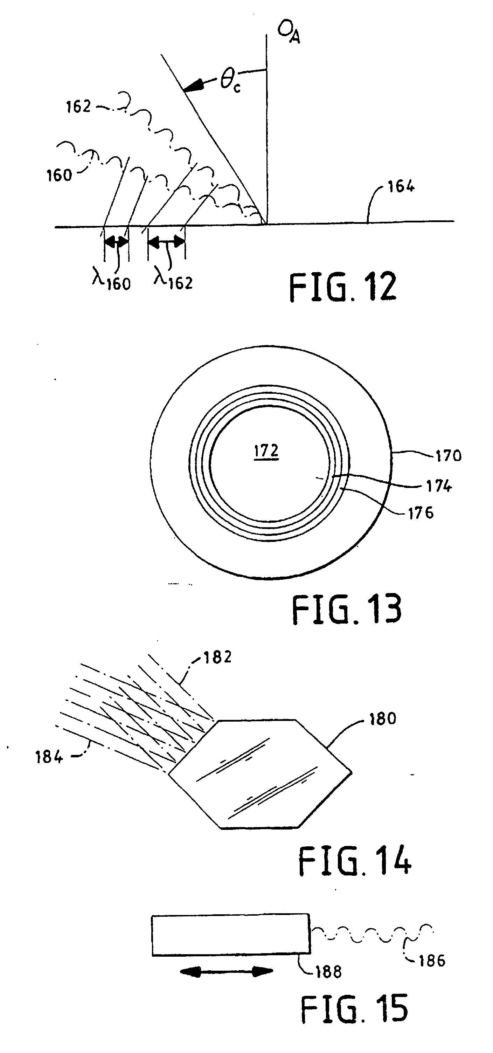

In Fig. 12, the phase shift is accomplished by varying the incident angle, either statically or dynamically, as between wavefronts 160 and 162, or alternatively, between either wavefront and a reference wavefront. As shown, the critical angle, $\theta_c$, is defined with respect to optical normal $O_A$ and to a total reflection boundary 164. Fig. 13 shows a schematic of a static mask 170 for selecting specific incident angles (and therefore phase), with the critical angle annulus shown at 172, and the maximum numerical aperture at 170, corresponding to that of an objective. Selecting annular apertures are shown at 174 and 176.

For a simple total internal reflection prism 180, as shown in Fig. 14, a wavefront 182 has an angle of incidence different from that of a wavefront 184. Accordingly, wavefront 182 produces an evanescent field and corresponding phase angles different from the evanescent field and corresponding phase angles produced by wavefront 184.

Another embodiment for phase control which utilizes dynamic phase shifting is shown in Fig. 15. Here, the phase shift can be accomplished by physical movement along an appropriate axis of the optical path 186, as indicated by the double arrow. This movement may be controlled by a piezo actuator 188. Alternatively, dynamic phase shifting may be produced by a phase plate or a tunable optical cavity.

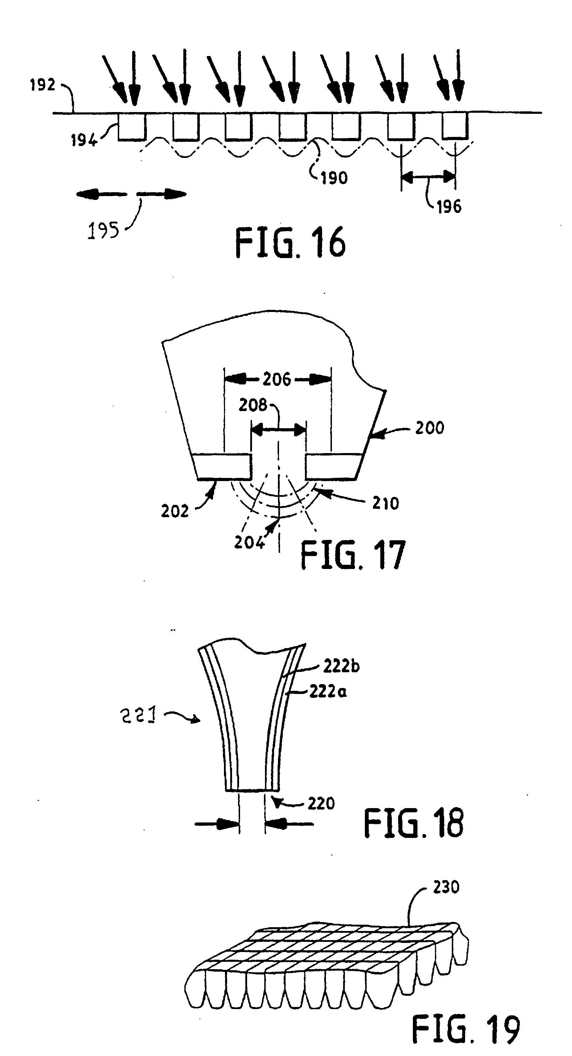

Fig 16 is a diagram of an evanescent field 190 resulting from a subwavelength diffracting structure 192, with phase determined by structure geometry 194, and with structure spatial frequency 196 dynamically adjustable for tuned heterodyning phase control. Dynamic phase shifting is accomplished with a tunable structure, indicated generally at 195. The means for dynamically adjusting the structure period can be mechanical, such as piezo, thermal, or even humidity control, or through the use of a surface acoustic wave.

Phase shifting can also be accomplished with a static structure that has local spatial frequency variations or is moved relative to the sample surface. In the example provided, control of phase of the evanescent field is achieved by illuminating diffractive structure 192 having spatial grating period 196 smaller than the illumination wavelength so that the evanescent modes are phase locked to the diffracting structure, and then to modify the grating period 196 to shift the evanescent field phase, such as by means a piezo crystal modulator or tunable acoustic wave modulator, for example. The resulting evanescent field arises from diffraction of the incident radiation by a structure with grating spatial period smaller than the wavelength of the radiation such that the diffracted orders are evanescent, where the local phase of the evanescent field is determined by and phase-locked to the local diffracting structure element.

As stated above, the benefits of phase shifting and interferometry apply to any optical device employing the evanescent field in which increased information in the lateral spatial X-Y plane is desired. In Fig. 17, for example, scanning near-field probe microscopes, which typically employ a tapered waveguide or optical fiber 200 with a substantially subwavelength tip aperture 208, utilize a generated evanescent field 210 to image an adjacent object surface (not shown) by translating aperture 208 over the surface. Because of the highly non-planar nature of the radiation from such an aperture, only the center of field 210 has an equal phase plane 204 normal to the probe. Therefore, restricting the phase of the radiation results in a smaller effective aperture and higher resolution. Further, the lateral resolution is dependent on an effective aperture diameter 206, which is larger than tip aperture 208 because tip aperture 208 is formed of a metallized layer 202, which is an imperfect conductor and cannot contain the radiation.

Fig. 18 diagrammatically shows an improved near-field probe 221 comprising an aperture 220, which is a multi-layer stack Bragg reflector which acts upon the phase of the radiation to restrict the aperture. Only two layers, 222a and 222b, are shown for clarity, although any number of layers can be used. As is known in the art, such a structure typically consists of alternating high and low index materials to form an energy barrier impenetrable by radiation of a certain wavelength. Such a structure can be formed in many ways. However a preferred method is to begin with a preform, with larger layer thicknesses, and then to heat and draw down the preform to the final required size.

A plurality of such probes can be fabricated and arranged in a close-packed matrix array. Fig. 19 illustrates how phase shifting can be accomplished with such a matrix of probes 230, moved in the X-Y plane. Close-packed matrix of probes 230 is locally scanned over a small distance, so that lateral phase shifting is achieved in addition to increasing total scan area and reducing scan time. A synthetic aperture can be formed by arranging matrix of probes 230 into a phase array. Thus, the invention has the ability to derive lateral spatial information about a surface illuminated with an evanescent field by controlling and then measuring the phase of the incident and returning radiation, respectively. The sample surface is the unknown quantity, while the lateral phase is the known quantity.

Reference is now made to Fig. 20, which shows an arrangement by which phase controlled evanescent field systems can be beneficially employed to achieve high density reading and writing capability. In Fig. 20, there is shown a recording medium 300, which can comprise a circular disc such as a conventional polycarbonate compact disc. Alternatively, recording medium 300 may comprise an optical card which is scanned in the X-Y plane. Medium 300 may further comprise a plurality of layers 322, 326, and 328 of different index of refraction wherein the information can be stored or retrieved from one or more of layers 322, 326, and 328.

When used for retrieving stored information, recording medium 300 comprises data bits in the form of features 302 such as optically-active sites, or radiation scatter features, or similar radiation perturbations, disposed in a layer of medium 300. When used for recording information, recording medium 300 comprises an active writeable layer, such as layer 324, adapted to change feature characteristics upon illumination by evanescent field 89. Changed features 302 comprise the data bits sensed in a subsequent reading operation.

The data bits may alternatively comprise nanometer-high topographic protrusions, or bumps (not shown), disposed on the layer, to which the evanescent field is sensitive. Medium 300 may contain well-known semiconductor-doped, chalcogenide glasses, or suitable photopolymer layers for enabling formation of features 302. For features 302 produced by optical perturbation, features 302 can further be of differing depths, or may exist beneath the surface layer as phase changing sites.

A flying total internal reflection head 304, configured as previously described, can serve to illuminate medium 300 with phase-controlled evanescent field radiation. The presence of features 302 converts the evanescent field into propagating radiation that is captured via a photodetector 306. Illumination and phase control are provided by means of a radiation source 308 and a phase controller 310. A phase analyzer 312 is provided between head 304 and photodetector 306. A processor 314 is used for analyzing the signal derived from photodetector 306. Alternately, features 302 can be internal to medium 300. As can be appreciated, phase control here greatly enhances the lateral resolution and thus packing density for the information-carrying capacity of medium 300.

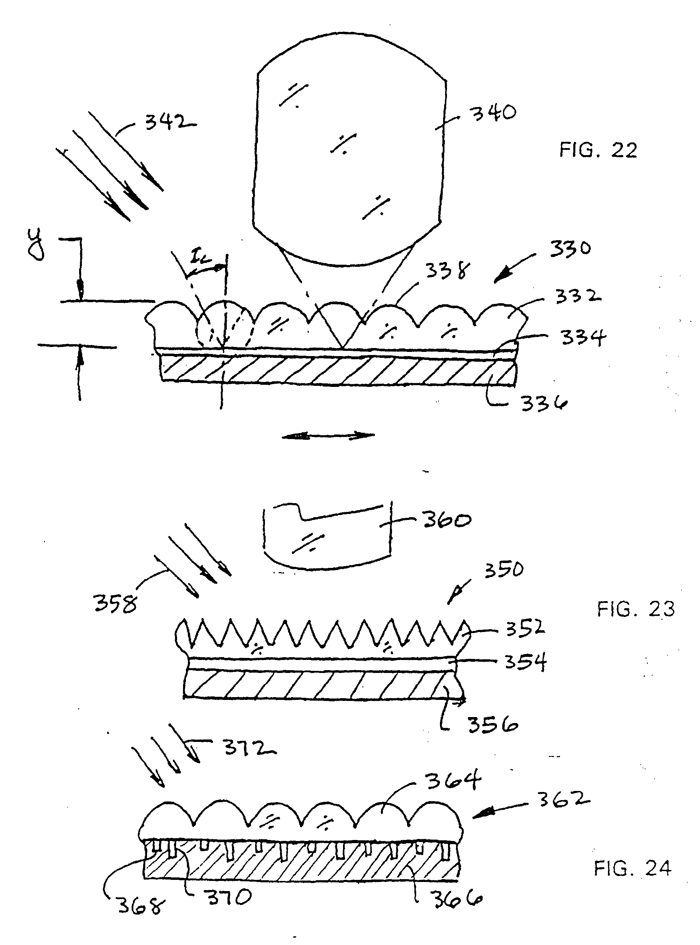

Fig. 21 shows an aplanatic sphere 320 that can be beneficially used in place of flying total internal reflection head 304. The bottom surface of aplanatic sphere may also be provided with a diffractive structure for forming the evanescent field. The systems described above include optical means separate from medium 300 for delivering the necessary phase-controlled evanescent field illumination. However, this can also be achieved by means of radiation conversion structures that form an integral part of medium 300. For example, diffractive surfaces, micro lenses, or micro prisms, can be formed in the surface of medium 300. There is shown in Fig. 22 an optical recording medium 330 comprising a distributed microlens 332 that overlies an active, writeable layer 334 that can have its optical properties locally changed by means of an incident writing evanescent field as described above.

Beneath writeable layer 334 is a substrate 336 which provides for mechanical support and stiffness. Distributed microlens 332 has an index of refraction which is greater than the index of refraction of writeable layer 334. Distributed microlens 332 comprises a series of periodic aplanatic microlenses 338. The distance "y" from the apices of individual microlenses 338 to the opposite surface of the microlens array 332 represents the aplanatic point of microlens 338. Typically, the dimension "y" is approximately 1.4 of the radius of the surface of microlens 338. It can be appreciated that the lateral extent of the active segment of each microlens 338 need be only somewhat larger than the extent of critical angle, $I_c$, as shown. With this configuration, the unused surface area between microlenses 338 is minimized. Furthermore, as the index of refraction of the microlens medium is increased, the critical angle decreases and microlens 338 can be made smaller.

Phase-controlled illumination is provided as indicated by 342, and the encoded information residing in layer 334 is imaged by a suitable objective 340. Objective 340 can be a microscope objective that transmits the image so obtained to video camera 26, as described above. When information is being read, objective 340 can be displaced across the surface of medium 330 or, alternatively, medium 330 can be displaced relative to microscope objective 340. Either method of movement can be performed as either a rotation or a displacement.

Fig. 23 shows an alternative recording medium 350 comprising a diffractive grating structure 352 overlying a read/write layer 354 which overlies a support substrate 356. Diffractive grating structure 352 has a spatial grating period smaller than the wavelength of a beam of phase controlled illumination 358 such that the diffracted orders are evanescent where the local phase of the evanescent field is determined by and phase locked to diffractive structure 352. The information present in layer 354 can be imaged by a microscope objective 360, or other suitable sensing device.

Fig. 24 diagrammatically illustrates another alternative recording medium 362 comprising a laminated structure in which a lenticulated microlens system 364 overlies an information layer 366, where the surface of information layer 366 comprises a plurality of pits 368 and 370 of different depths as a means for encoding information. Pits 368 and 370 can be different tracks that can be accessed via a single corresponding lenticule to provide different optical signals simultaneously for parallel processing. With medium 362, as well as with media 330 and 350, the encoded information can be sensed by a microscope objective which is capable of simultaneously imaging two or more lenticules. Because the information is imaged full field rather than as a single track at a time, it is possible to scan over many lenticules simply by addressing the corresponding pixels in the digital image so obtained. It should also be understood that any or all of the features described in connection with reference to system 10 can be incorporated into the system of Fig. 20 or used in connection with the media of Figs. 22-24.

While the invention has been described with reference to particular embodiments, it will be understood that the present invention is by no means limited to the particular constructions and methods herein disclosed and/or shown in the figures, but also comprises any modifications or equivalents within the scope of the claims.

## Claims

1. A system for sensing, displaying, optical recording or storing features of an object (45) by means of an evanescent field, said system comprising:

    illumination means (39) for providing at least one beam of radiation (85) having at least one predetermined wavelength and phase angle;

    radiation conversion means (24) comprising an active facet (44), said radiation conversion means (24) adapted for receiving said at least one beam of radiation (85) and producing a corresponding evanescent field (89) at said active facet (44), and

    means for receiving the frustrating total internal reflection light from the active facet (44)

    **characterized in**

    phase control means (41) for selectively controlling said predetermined wavelength and phase angle of said beam of radiation (85) such that the intensity of said evanescent field (89) varies across said active facet (44) as a function of the phase of said beam of radiation (85), and

    means for displaying, optical recording or storing the features of the object (45) based on the signals corresponding to surface features sensed by said evanescent field (89) by said means for receiving the frustrating total internal reflection light from the active facet (44).

2. The system of claim 1 further comprising means for receiving (28) said propagating radiation (51) and detector means (32) for generating image signals corresponding to surface layer features sensed by said evanescent field (89), and/or phase analyzer means (78) disposed between said radiation conversion means (24) and said means for receiving (28) said propagating radiation (51), and/or image processing means (16) for receiving said image signals and generating a composite image signal from which spatial and optical features disposed in a layer of the object (45) can be displayed or measured, and/or means for receiving (14) said image signals and generating a tone mapping signal in which said features are encoded as variations in image tone.

3. The system of claims 1 or 2 wherein said illumination means (39) comprises a laser or a light-emitting diode.

4. The system of any one of claims 1 to 3 wherein said phase control means (41) comprises filtering means for selectively controlling the output of said illumination means (34) to preselected wavelengths of radiation; polarization means; an electro-optic modulator; a tunable optical cavity; means for changing the angle of incidence of said beam of radiation (85) with respect to said active facet (44); a retarding phase plate; and/or means for selecting the azimuthal angle of said beam of radiation (85) such that the direction of the Goos-Haenchen shift is determined.

5. The system of any one of claims 1 to 3 wherein said radiation conversion means (24) further comprises a prismatic dielectric body comprising an entrance facet (42) for receiving said beam of radiation (85); a prismatic dielectric body comprising an emitting facet (47) for emitting said propagating radiation (51); and/or an entrance facet (42) for receiving said beam of radiation (85) and a radiation-emitting facet (46) for emitting specular propagating radiation (53), said entrance facet (42) and said radiation-emitting facet (46) being structured and positioned with respect to said active facet (44) such that said active facet (44) provides a totally internally reflecting surface for said beam of radiation (85).

6. The system of any one of claims 1 to 3 wherein said radiation conversion means (24) comprises an aplanatic sphere (320); and/or a diffractive grating structure (192) having a spatial grating period smaller than the wavelength of said beam of radiation (85), wherein said radiation conversion means (24) further comprises means for varying said spatial grating period of said diffractive grating structure (192) such that the phase of said evanescent field (89) is shifted, and wherein said means for varying said spatial grating period preferably comprises a tunable acoustic wave modulator, or a piezo crystal modulator.

7. The system of any one of claims 1 to 3 wherein said radiation conversion means (24) comprises a tapered dielectric near-field probe (221) comprising a subwavelength aperture (220) to increase lateral resolution, wherein said tapered dielectric near field probe (221) preferably comprises multiple dielectric layer Bragg reflectors (222a, 222b) such that said evanescent field (89) is restricted in the lateral plane.

8. The system of any one of claims 1 to 3 wherein said radiation conversion means (24) comprises a plurality of probes (230) arranged in a close-packed matrix, wherein said plurality of probes (230) are preferably arranged into a phase array so as to produce a synthetic aperture.

9. The system of any one of claims 1 to 8 further comprising a recording medium (300) comprising at least one interface surface (322) having formed therein a plurality of features (302) by which information is encoded in said recording medium (300); and/or a recording medium (300) comprising at least one active layer (324) for having formed therein a plurality of features (302) by which information is encoded in said recording medium (300).

10. The system of claim 9 wherein said radiation conversion means (24) comprises a distributed micro-optical structure overlying said recording medium (300).

11. The system of claims 9 or 10 in which said recording medium further comprises a circular disc.

12. The system of claims 9 or 10 wherein said features (302) are disposed at varying distances from said surface (322) of said recording medium (300).

13. The system of claims 9 or 10 wherein said recording medium (300) further comprises a plurality of layers (326, 328) of different index of refraction wherein the information encoded in said layers (324) is preferably selected by varying the illumination wavelength, incident angle, polarization, or phase of said beam of radiation (85).

14. The system of claims 9 or 10 wherein said features (302) comprise phase changes in a dielectric or semiconductor.

**15.** The system of claims 9 or 10 wherein said recording medium (300) further comprises semiconductor-doped, chalcogenide glasses, or photopolymer materials.

**16.** The system of claim 10 wherein said distributed micro-optical structure comprises a plurality of periodic microlenses (338), wherein each of said microlenses (338) preferably comprises an aplanatic lens; or a diffractive grating structure (352).

**17.** A method for utilizing a phase-controlled evanescent field to sense or to produce features at the surface layer of an object (45), said method comprising the steps of:

providing at least one beam of radiation (85) having at least one predetermined wavelength and phase angle;
converting said beam of radiation (85) into an evanescent field (89) at an active facet (44);
selectively controlling said predetermined wavelength and phase angle of said beam of radiation (85) such that the intensity of said evanescent field (89) varies as a function of the phase angle of said beam of radiation (85); and

positioning the surface layer of the object (45) in proximity to said evanescent field such that there is produced propagating radiation (51).

**18.** The method of claim 17 further comprising the step of producing a feature at the surface layer of the object (45) by means of said evanescent field (89).

**19.** The method of claim 17 further comprising the step of analyzing said propagating radiation (51) by means of a phase analyzer (78) to produce image signals having amplitudes that vary in accordance with the presence or absence of a corresponding feature, and/or further comprising the step of generating a tone mapping signal from said image signals in which the presence or absence of a feature is encoded as a variation in tone.

**20.** The method of claim 17 wherein said step of selectively controlling said predetermined wavelength and phase angle of said beam of radiation (85) is dynamic or static in operation.

**21.** The method of claim 17 wherein said step of selectively controlling said predetermined wavelength and phase angle of said beam of radiation (85) comprises the step of filtering said beam of radiation (85) to modify its output to preselected wavelengths of radiation, or comprises the step of polarizing said beam of radiation (85), or comprises the step of changing the angle of incidence of said beam of radiation (85), or comprises the step of selecting the azimuthal angle of said beam of radiation (85).

**22.** The method of claim 17 wherein said step of converting said beam of radiation (85) into an evanescent field (89) comprises the step of illuminating a diffractive grating structure (192) having a spatial grating period smaller than the wavelength of said beam of radiation (85), wherein said spatial grating period is preferably varied so as to shift the phase of the evanescent field (89).

**Patentansprüche**

**1.** System zur Erfassung, Anzeige, optischen Aufzeichnung oder Speicherung von Merkmalen eines Gegenstandes (45) mit Hilfe eines evaneszierenden Feldes, wobei das System enthält:

eine Beleuchtungseinrichtung (39) zur Bereitstellung mindestens eines Strahls (beam of radiation) (85) mit mindestens einer/einem vorherbestimmten Wellenlänge und Phasenwinkel;

eine Einrichtung (24) zur Umwandlung der Strahlung, enthaltend eine aktive Facette (44), wobei die Einrichtung (24) zur Umwandlung der Strahlung angepasst ist, um mindestens einen Strahl (85) zu empfangen und ein entsprechendes evaneszierendes Feld (89) an dieser aktiven Facette (44) zu bilden,

und eine Einrichtung zum Empfang des von der aktiven Facette (44) verschwindenden (frustrating) total innenreflektierten Lichts,

**gekennzeichnet durch**

eine Phasensteuerungseinrichtung (41) zur selektiven Steuerung der vorherbestimmten Wellenlänge und des Phasenwinkels des Strahls (85), so dass die Intensität des evaneszierenden Feldes (89) über die aktive Facette (44) als Funktion der Phase des Strahls (85) variiert, und

eine Einrichtung zur Anzeige, zur optischen Aufzeichnung oder Speicherung der Merkmale des Gegenstandes (45), bezogen auf die Signale entsprechend den Oberflächenmerkmalen, die **durch** das evaneszierende Feld (89) mit Hilfe der Einrichtung zum Empfang des verschwindenden Lichts der totalen Innenreflexion an der aktiven Facette (44) erfasst werden.

2. System nach Anspruch 1, weiterhin enthaltend eine Einrichtung zum Empfang (28) der sich ausbreitenden Strahlung (51) und eine Detektoreinrichtung (32) zur Erzeugung von Bildsignalen entsprechend den Oberflächenmerkmalen, die durch das evaneszierende Feld (89) erfasst werden, und/oder eine Phasenanalysatoreinrichtung (78), die zwischen der Einrichtung (24) zur Umwandlung der Strahlung und der Einrichtung (28) zum Empfang der sich ausbreitenden Strahlung (51) angeordnet sind, und/oder eine Bildverarbeitungseinrichtung (16) zum Empfang der Bildsignale und zur Erzeugung eines zusammengesetzten Bildsignals, von der räumliche und optische Merkmale, die in einer Schicht des Gegenstandes (45) angeordnet sind, angezeigt oder gemessen werden können, und/oder eine Einrichtung (14) zum Empfang der Bildsignale und zur Erzeugung eines Ton-Kartierungssignals (tone mapping signal), in welchen diese Merkmale als Änderungen des Bildtones codiert sind.

3. System nach Anspruch 1 oder 2, worin die Beleuchtungseinrichtung (39) einen Laser oder eine lichtemittierende Diode darstellt.

4. System nach einem der Ansprüche 1 bis 3, worin die Phasensteuerungseinrichtung (41) eine Filtereinrichtung zur selektiven Steuerung des Ausgangs der Beleuchtungseinrichtung (34) zu vorgewählten Wellenlängen der Strahlung; eine Polarisierungseinrichtung; einen elektro-optischen Modulator; eine abstimmbare optische Kavität; eine Einrichtung zur Änderung des Einfallswinkels des Strahls (85) im Hinblick auf die aktive Facette (44); eine retardierende Phasenplatte (retarding phase plate); und/oder eine Einrichtung zur Auswahl des Azimut-Winkels des Strahls (85) enthält, so dass die Richtung der Goos-Haenchen-Verschiebung bestimmt wird.

5. System nach einem der Ansprüche 1 bis 3, worin die Einrichtung (24) zur Umwandlung der Strahlung weiterhin einen prismatischen dielektrischen Körper, enthaltend eine Eingangsfacette (42) zum Empfang des Strahls (85); einen prismatischen dielektrischen Körper, enthaltend eine emittierende Facette (47) zum Emittieren der sich ausbreitenden Strahlung (51); und/oder eine Eingangsfacette (42) zum Empfang des Strahls (85) und eine strahlungsemittierende Facette (26) zum Emittieren von gespiegelter, sich ausbreitender Strahlung (53) enthält, wobei die Eingangsfacette (42) und die strahlungsemittierende Facette (46) gegenüber der aktiven Facette (44) so strukturiert und angeordnet sind, dass die aktive Facette (44) eine Oberfläche mit innerer Totalreflexion für den Strahl (85) bietet.

6. System nach einem der Ansprüche 1 bis 3, worin die Einrichtung (24) zur Umwandlung der Strahlung eine aplanatische Sphäre (320) und/oder eine Beugungsgitterstruktur (92) mit einer räumlichen Gitterperiode, die kleiner als die Wellenlänge des Strahls (85) ist, enthält, worin die Einrichtung (24) zur Umwandlung der Strahlung weiterhin eine Einrichtung (192) zur Veränderung der räumlichen Gitterperiode der Gitterbeugungsstruktur enthält, so dass die Phase des evaneszierenden Feldes (89) verschoben wird, und worin die Einrichtung zur Veränderung der räumlichen Gitterperiode vorzugsweise einen abstimmbaren akustischen Wellenmodulator oder einen Piezokristall-Modulator enthält.

7. System nach einem der Ansprüche 1 bis 3, worin die Einrichtung (24) zur Umwandlung der Strahlung einen sich verjüngenden dielektrischen Nahfeldfühler (tapered dielectric near-field probe) (221) enthält, welcher eine Subwellenlängen-Öffnung (220) zur Erhöhung der seitlichen Auflösung enthalten, wobei der sich verjüngende dielektrische Nahfeldfühler (221) vorzugsweise Bragg-Reflektoren mit mehreren dielektrischen Schichten (222a, 222b) enthält, so dass das evaneszierende Feld (89) in der seitlichen Ebene beschränkt ist.

8. System nach einem der Ansprüche 1 bis 3, worin die Einrichtung (24) zur Umwandlung der Strahlung mehrere Fühler (230) enthält, die in einer dicht gepackten Matrix angeordnet sind, wobei die Vielzahl der Fühler (230) vorzugsweise in einer Phasenreihe angeordnet ist, so dass eine synthetische Öffnung erzeugt wird.

9. System nach einem der Ansprüche 1 bis 8, weiterhin enthaltend ein Aufzeichnungsmedium (330), das mindestens eine Grenzfläche (322) enthält, in der mehrere Merkmale (302) ausgebildet sind, durch die Informationen in dem

EP 0 920 696 B1

Aufzeichnungsmedium (300) codiert werden; und/oder ein Aufzeichnungsmedium (300), das mindestens eine aktive Schicht (324) enthält, in der mehrere Merkmale (302) ausgebildet sind, durch die Informationen in dem Aufzeichnungsmedium (300) codiert werden.

10. System nach Anspruch 9, worin die Einrichtung (24) zur Umwandlung der Strahlung eine verteilte mikrooptische Struktur enthält, die über dem Aufzeichnungsmedium (300) liegt.

11. System nach Anspruch 9 oder 10, worin das Aufzeichnungsmedium weiterhin eine kreisförmige Scheibe enthält.

12. System nach Anspruch 9 oder 10, worin die Merkmale (302) in wechselnden Abständen von der Oberfläche (322) des Aufzeichnungsmediums (300) angeordnet sind.

13. System nach Anspruch 9 oder 10, worin das Aufzeichnungsmedium (300) weiterhin eine Vielzahl von Schichten (326, 328) mit unterschiedlichem Brechungsindex enthält, und worin die in diesen Schichten (324) codierten Informationen vorzugsweise dadurch selektiert werden, dass die Beleuchtungswellenlänge, der Einfallswinkel, die Polarisation oder die Phase des Strahls (85) variiert werden.

14. System nach Anspruch 9 oder 10, worin die Merkmale (302) Phasenänderungen in einem Dielektrikum oder einem Halbleiter umfassen.

15. System nach Anspruch 9 oder 10, worin das Aufzeichnungsmedium (300) weiterhin Halbleiter-gedopte Chalkogenidgläser oder photopolymere Materialien enthält.

16. System nach Anspruch 10, worin die verteile mikrooptische Struktur eine Vielzahl von periodischen Mikrolinsen (338), von denen jede vorzugsweise eine aplanatische Linse darstellt; oder eine Beugungsgitterstruktur (352) enthält.

17. Verfahren zur Verwendung eines phasengesteuerten evaneszierenden Feldes zum Erfassen oder zum Erzeugen von Merkmalen an der Oberflächenschicht eines Gegenstandes (45), wobei das Verfahren folgende Schritte umfasst:

   Bereitstellung mindestens eines Strahls (85) mit mindestens einer/einem vorherbestimmten Wellenlänge oder Phasenwinkel;

   Umwandlung des Strahls (85) in ein evaneszierendes Feld (89) an einer aktiven Facette (44);

   selektive Steuerung der/des vorherbestimmten Wellenlänge und Phasenwinkels des Strahls (85), so dass die Intensität des evaneszierenden Feldes (89) als Funktion des Phasenwinkels des Strahls (85) variiert; und

   Anordnung der Oberflächenschicht des Gegenstandes (45) in der Nähe des evaneszierenden Feldes, so dass eine sich ausbreitende Strahlung (51) erzeugt wird.

18. Verfahren nach Anspruch 17, weiterhin umfassend den Schritt der Erzeugung eines Merkmals an der Oberflächenschicht des Gegenstandes (45) mit Hilfe des evaneszierenden Feldes.

19. Verfahren nach Anspruch 17, weiterhin umfassend den Schritt des Analysierens der sich ausbreitenden Strahlung (51) mit Hilfe eines Phasenanalysators (78) zur Erzeugung von Bildsignalen mit Amplituden, die in Abhängigkeit von der Anwesenheit oder Abwesenheit eines entsprechenden Merkmals variieren, und/oder weiterhin umfassend den Schritt der Erzeugung eines Ton-Kartierungssignals aus den Bildsignalen, in welchem die Anwesenheit oder Abwesenheit eines Merkmals als Variation des Tons codiert wird.

20. Verfahren nach Anspruch 17, worin der Schritt der selektiven Steuerung der/des vorherbestimmten Wellenlänge und Phasenwinkels des Strahls (85) im Betrieb dynamisch oder statisch ist.

21. Verfahren nach Anspruch 17, worin der Schritt der selektiven Steuerung der/des vorherbestimmten Wellenlänge und Phasenwinkels des Strahls (85) den Schritt des Filterns des Strahls (85), um seinen Ausgang auf vorherbestimmte Strahlungswellenlängen zu modifizieren; oder den Schritt des Polarisierens des Strahls (85); oder den Schritt der Änderung des Einfallswinkels des Strahls (85); oder den Schritt der Auswahl des Azimut-Winkels des Strahls (85) umfasst.

**22.** Verfahren nach Anspruch 17, worin der Schritt der Umwandlung des Strahls (85) in ein evaneszierendes Feld (89) den Schritt der Beleuchtung einer Beugungsgitterstruktur (192) mit einer kleineren räumlichen Gitterperiode als die Wellenlänge des Strahls (85) umfasst, wobei die räumliche Gitterperiode vorzugsweise so variiert wird, dass die Phase des evaneszierenden Feldes (89) verschoben wird.

**Revendications**

**1.** Système pour détecter, afficher, enregistrer optiquement ou stocker des motifs d'un objet (45) au moyen d'un champ évanescent, ledit système comprenant :

un moyen d'éclairage (39) pour fournir au moins un faisceau de rayonnement (85) ayant au moins une longueur d'onde prédéfinie et un angle de phase ;
un moyen de conversion (24) de rayonnement comprenant une facette active (44), ledit moyen de conversion (24) de rayonnement étant adapté pour recevoir ledit au moins un faisceau de rayonnement (85) et produire un champ évanescent correspondant (89) au niveau de ladite facette active (44), et
un moyen pour recevoir la lumière de réflexion interne totale frustrante provenant de la facette active (44)

**caractérisé par**

un moyen de commande de phase (41) pour commander sélectivement lesdits longueur d'onde prédéfinie et angle de phase dudit faisceau de rayonnement (85) de telle manière que l'intensité dudit champ évanescent (89) varie dans ladite facette active (44) en fonction de la phase dudit faisceau de rayonnement (85), et
un moyen pour afficher, enregistrer optiquement ou stocker les motifs de l'objet (45) en se basant sur les signaux correspondant aux motifs de surface détectés par ledit champ évanescent (89) par ledit moyen pour recevoir la lumière de réflexion interne totale frustrante provenant de la facette active (44).

**2.** Système selon la revendication 1, comprenant en outre un moyen pour recevoir (28) ledit rayonnement de propagation (51) et un moyen formant détecteur (32) pour produire des signaux d'image correspondant à des motifs de couche de surface détectés par ledit champ évanescent (89), et/ou un moyen formant analyseur de phase (78) placé entre ledit moyen de conversion (24) de rayonnement et ledit moyen pour recevoir (28) ledit rayonnement de propagation (51), et/ou un moyen de traitement (16) d'image pour recevoir lesdits signaux d'image et produire un signal d'image composite à partir duquel des motifs spatiaux et optiques disposés dans une couche de l'objet (45) peuvent être affichés ou mesurés, et/ou un moyen pour recevoir (14) lesdits signaux d'image et produire un signal d'application de tons dans lequel lesdits motifs sont codés en tant que variations de ton d'image.

**3.** Système selon la revendication 1 ou 2, dans lequel ledit moyen d'éclairage (39) comprend un laser ou une diode électroluminescente.

**4.** Système selon l'une quelconque des revendications 1 à 3, dans lequel ledit moyen de commande de phase (41) comprend un moyen de filtrage pour commander sélectivement la sortie dudit moyen d'éclairage (34) à des longueurs d'onde de rayonnement présélectionnées, un moyen de polarisation, un modulateur électro-optique, une cavité optique accordable, un moyen pour changer l'angle d'incidence dudit faisceau de rayonnement (85) par rapport à ladite facette active (44), une plaque à phase retardatrice, et/ou un moyen pour choisir l'écart azimutal dudit faisceau de rayonnement (85) de telle manière que la direction du décalage de Goos-Haenchen est déterminée.

**5.** Système selon l'une quelconque des revendications 1 à 3, dans lequel ledit moyen de conversion (24) de rayonnement comprend en outre un corps diélectrique prismatique comprenant une facette d'entrée (42) pour recevoir ledit faisceau de rayonnement (85), un corps diélectrique prismatique comprenant une facette d'émission (47) pour émettre ledit rayonnement de propagation (51), et/ou une facette d'entrée (42) pour recevoir ledit faisceau de rayonnement (85) et une facette d'émission de rayonnement (46) pour émettre un rayonnement de propagation spéculaire (53), ladite facette d'entrée (42) et ladite facette d'émission de rayonnement (46) étant structurées et positionnées par rapport à ladite facette active (44) de telle manière que ladite facette active (44) constitue une surface de réflexion interne totale pour ledit faisceau de rayonnement (85).

**6.** Système selon l'une quelconque des revendications 1 à 3, dans lequel ledit moyen de conversion (24) de rayonnement comprend une sphère aplanétique (320), et/ou une structure de réseau de diffraction (192) ayant une période spatiale de réseau plus petite que la longueur d'onde dudit faisceau de rayonnement (85), dans lequel ledit moyen de conversion (24) de rayonnement comprend en outre un moyen pour faire varier ladite période spatiale de réseau de ladite structure de réseau de diffraction (192) de telle manière que la phase dudit champ évanescent (89) est décalée, et dans lequel ledit moyen pour faire varier ladite période spatiale de réseau comprend de préférence un modulateur d'onde acoustique accordable, ou un modulateur à cristal piézo-électrique.

**7.** Système selon l'une quelconque des revendications 1 à 3, dans lequel ledit moyen de conversion (24) de rayonnement comprend une sonde de champ proche diélectrique effilée (221) comprenant une ouverture sub-longueur d'onde (220) pour accroître la résolution latérale, ladite sonde de champ proche diélectrique effilée (221) comprenant de préférence plusieurs réflecteurs de Bragg à couche diélectrique (222a, 222b) de telle sorte que ledit champ évanescent (89) est restreint dans le plan latéral.

**8.** Système selon l'une quelconque des revendications 1 à 3, dans lequel ledit moyen de conversion (24) de rayonnement comprend une pluralité de sondes (230) agencées en matrice serrée, ladite pluralité de sondes (230) étant de préférence agencées en un réseau en phase afin de produire une ouverture synthétique.

**9.** Système selon l'une quelconque des revendications 1 à 8, comprenant en outre un support d'enregistrement (300) comprenant au moins une surface d'interface (322) dans laquelle est formée une pluralité de motifs (302) par lesquels de l'information est codée dans ledit support d'enregistrement (300), et/ou un support d'enregistrement (300) comprenant au moins une couche active (324) pour y former une pluralité de motifs (302) par lesquels de l'information est codée dans ledit support d'enregistrement (300).

**10.** Système selon la revendication 9, dans lequel ledit moyen de conversion (24) de rayonnement comprend une structure micro-optique répartie recouvrant ledit support d'enregistrement (300).

**11.** Système selon la revendication 9 ou 10, dans lequel ledit support d'enregistrement comprend en outre un disque circulaire.

**12.** Système selon la revendication 9 ou 10, dans lequel lesdits motifs (302) sont disposés à des distances variables par rapport à ladite surface (322) dudit support d'enregistrement (300).

**13.** Système selon la revendication 9 ou 10, dans lequel ledit support d'enregistrement (300) comprend en outre une pluralité de couches (326, 328) ayant différents indices de réfraction, l'information codée dans lesdites couches (324) étant de préférence choisie en faisant varier la longueur d'onde d'éclairage, l'angle d'incidence, la polarisation, ou la phase dudit faisceau de rayonnement (85).

**14.** Système selon la revendication 9 ou 10, dans lequel lesdits motifs (302) comprennent des changements de phase dans un diélectrique ou un semiconducteur.

**15.** Système selon la revendication 9 ou 10, dans lequel ledit support d'enregistrement (300) comprend en outre des verres de chalcogénures dopés au semiconducteur, ou des photopolymères.

**16.** Système selon la revendication 10, dans lequel ladite structure micro-optique répartie comprend soit une pluralité de micro-lentilles périodiques (338), chacune desdites micro-lentilles (338) comprenant de préférence une lentille aplanétique, soit une structure de réseau de diffraction (352).

**17.** Procédé pour utiliser un champ évanescent commandé en phase pour détecter ou pour produire des motifs au niveau de la couche de surface d'un objet (45), ledit procédé comprenant les étapes consistant à :

fournir au moins un faisceau de rayonnement (85) ayant au moins une longueur d'onde prédéfinie et un angle de phase ;
convertir ledit faisceau de rayonnement (85) en un champ évanescent (89) au niveau d'une facette active (44) ;
commander sélectivement ladite longueur d'onde prédéfinie et l'angle de phase dudit faisceau de rayonnement (85) de telle manière que l'intensité dudit champ évanescent (89) varie en fonction de l'angle de phase dudit faisceau de rayonnement (85) ; et
positionner la couche de surface de l'objet (45) à proximité dudit champ évanescent de telle manière qu'il se produit un rayonnement de propagation (51).

18. Procédé selon la revendication 17, comprenant en outre l'étape consistant à produire un motif à la couche de surface de l'objet (45) au moyen dudit champ évanescent (89).

19. Procédé selon la revendication 17, comprenant en outre l'étape consistant à analyser ledit rayonnement de propagation (51) au moyen d'un analyseur de phase (78) afin de produire des signaux d'image dont les amplitudes varient en fonction de la présence ou de l'absence d'un motif correspondant, et/ou comprenant en outre l'étape consistant à produire un signal d'application de tons à partir desdits signaux d'image dans lequel la présence ou l'absence d'un motif est codée sous forme d'une variation de ton.

20. Procédé selon la revendication 17, dans lequel ladite étape consistant à commander sélectivement ladite longueur d'onde prédéfinie et l'angle de phase dudit faisceau de rayonnement (85) est de fonctionnement dynamique ou statique.

21. Procédé selon la revendication 17, dans lequel ladite étape consistant à commander sélectivement ladite longueur d'onde prédéfinie et l'angle de phase dudit faisceau de rayonnement (85) comprend l'étape consistant à filtrer ledit faisceau de rayonnement (85) pour modifier sa sortie de manière à obtenir des longueurs d'onde de rayonnement présélectionnées, ou comprend l'étape consistant à polariser ledit faisceau de rayonnement (85), ou comprend l'étape consistant à modifier l'angle d'incidence dudit faisceau de rayonnement (85), ou comprend l'étape consistant à choisir l'écart azimutal dudit faisceau de rayonnement (85).

22. Procédé selon la revendication 17, dans lequel ladite étape consistant à convertir ledit faisceau de rayonnement (85) en un champ évanescent (89) comprend l'étape consistant à éclairer une structure de réseau de diffraction (192) ayant une période spatiale de réseau plus petite que la longueur d'onde dudit faisceau de rayonnement (85), ladite période spatiale de réseau étant de préférence modifiée de façon à déphaser le champ évanescent (89).

FIG.1

FIG. 2

FIG. 3A

FIG. 3B

EP 0 920 696 B1

FIG. 4

FIG. 5

EP 0 920 696 B1

FIG. 6

FIG. 7

FIG. 8

EP 0 920 696 B1

FIG. 9

FIG. 10

FIG. 11

$O_A$

$\theta_c$

162

160

164

$\lambda_{160}$  $\lambda_{162}$

## FIG. 12

172

170

174

176

## FIG. 13

182

180

184

## FIG. 14

188

186

## FIG. 15

192

194

190

196

195

FIG. 16

206

208

200

202

210

204

FIG. 17

222b

222a

221

220

FIG. 18

230

FIG. 19

FIG. 20

FIG. 21

EP 0 920 696 B1

342

340

FIG. 22

$I_L$

330

338

332

334

336

360

358

350

FIG. 23

352

354

356

372

364

362

368  370

366

FIG. 24